# EUROPÄISCHE PATENTANMELDUNG

(11) **EP 2 944 786 A1**
(43) Veröffentlichungstag der Anmeldung: **18.11.2015**
(21) Anmeldenummer: 15000610.4
(22) Anmeldetag: 03.03.2015
(51) Int. Cl.: F01P 7/02, F01P 7/14

(54) **Steuer- oder Regelverfahren für ein Kraftfahrzeug**

(30) Priorität: 17.05.2014 DE 102014007303
(71) Anmelder: MAN Truck & Bus AG, 80995 München (DE)
(72) Erfinder: Schydlo, Alexander, 81243 München (DE)

(57) **Zusammenfassung**

Die Erfindung betrifft ein Verfahren zur Regelung und/oder Steuerung wenigstens einer Vorrichtung, die Teil eines Kühlsystems eines Fahrzeugs, insbesondere eines Nutzfahrzeugs ist. Die Erfindung betrifft ferner ein Verfahren zur Regelung oder Steuerung einer Vorrichtung, die eine Energieeffizienz eines Fahrzeugbetriebs beeinflusst. Das Verfahren zur Regelung umfasst das Bereitstellen einer neuronalen Operationseinheit (1a; 2a; 3a; 4a) zur Regelung oder Steuerung der Vorrichtung (1; 2; 3; 4), wobei die neuronale Operationseinheit (1a; 2a; 3a; 4a) mittels eines künstlichen neuronalen Netzes eingerichtet ist, einen Stellwert der Vorrichtung (1; 2; 3; 4) als Ausgangswert in Abhängigkeit von übermittelten Werten (35) mehrerer Eingangsgrößen zu bestimmen; wobei die Eingangsgrößen wenigstens eine Fluidtemperatur des Kühlsystems und eine Topographie eines vorausliegenden Fahrtroutenabschnitts des Fahrzeugs umfassen; und wobei die Knoten (41) des künstlichen neuronalen Netzes basierend auf einer Korrelation zwischen den Werten der Eingangsgrößen (34) und den Ausgangswerten vorgegeben werden und die Korrelation durch Optimierung eines summarischen Energieverbrauchs des Fahrzeugs im vorausliegenden Fahrtroutenabschnitt und/oder einer Fahrfähigkeit des Fahrzeugs ohne erwärmungsbedingte Leistungsdrosselung im vorausliegenden Fahrtroutenabschnitt bestimmt wird.

## Beschreibung

Die Erfindung betrifft ein Verfahren zur Regelung oder Steuerung wenigstens einer Vorrichtung, die Teil eines Kühlsystems eines Fahrzeugs, insbesondere eines Nutzfahrzeugs, ist. Die Erfindung betrifft ferner ein Verfahren zur Regelung oder Steuerung einer Vorrichtung, die eine Energieeffizienz eines Fahrzeugbetriebs beeinflusst.

Aus dem Stand der Technik ist es bekannt, eine Brennkraftmaschine eines Fahrzeugs durch ein Kühlsystem zu kühlen. Die Kühlleistung des Kühlsystems kann durch Regelung oder Steuerung verschiedener Vorrichtungen des Kühlsystems, z. B. einer Kühlmittelpumpe, eines Hauptwasserthermostats, eines Lüfters oder einer Kühlerjalousie, angepasst werden. Bekannte Regler oder Steuerungen basieren üblicherweise auf einem physikalischen Modell und WENN-DANN-Regeln sowie der Überwachung von vorab festgelegten Grenzwerten, z. B. der maximal zulässigen Kühlmittel- oder Ladelufttemperatur.

Derartige klassische Regler oder Steuerungen haben jedoch den Nachteil, dass das Aufstellen der physikalischen Modelle aufwändig ist und die Regler nicht für alle Fahr- und Betriebssituationen des Fahrzeugs eine optimale Regelung ermöglichen, was nachfolgend anhand des Beispiels einer Kühlerjalousie verdeutlicht werden soll.

Nutzfahrzeuge können mit einer an der Frontseite des Fahrzeugs angeordneten Kühlerjalousie ausgestattet sein, mit der während der Fahrt ein auf einen Kühler auftreffender Kühlluftstrom einstellbar ist. Ein bekannter Ansatz zur Steuerung der Kühlerjalousie sieht beispielsweise vor, die Kühlerjalousie im Teillastbetrieb des Nutzfahrzeugs, beispielsweise bei der Fahrt in einer Ebene, zu schließen, um dadurch den cw-Wert (Strömungswiderstandskoeffizient) zu verbessern und dadurch Kraftstoff zu sparen. Beim Übergang in den Volllastbetrieb, z. B. bei Fahrt in einer Steigung, wird die Kühlerjalousie geöffnet, so dass durch den zusätzlich auf den Kühler auftreffenden Kühlluftstrom die Übertragung der Abwärme am Kühler erhöht wird, um dem erhöhten Kühlungsbedarf während Bergfahrten Rechnung zu tragen.

Im Rahmen der Erfindung wurde festgestellt, dass dieser herkömmliche Steuerungsansatz jedoch nicht für alle Fahrsituationen eine optimale Steuerung ermöglicht. So kann es vorteilhaft sein, bereits rechtzeitig vor einem Einfahren in eine lange und/oder starke Steigung die Kühlerjalousie zu öffnen, wodurch ein zusätzliches Absenken der Kühlmitteltemperatur bis zum Erreichen des Steigungsbeginns erfolgt. Durch die gesunkene Kühlmitteltemperatur bei Steigungsbeginn dauert es länger, bis das Kühlmittel in der Steigung die Zuschalttemperatur des Lüfters erreicht. Die eingesparte Energie durch das verzögerte Zuschalten des Lüfters kann den erhöhten Energieverbrauch in der Ebene durch das frühere Öffnen der Kühlerjalousie und den dadurch erhöhten cw-Wert übersteigen und somit zu einem geringeren Kraftstoffverbrauch entlang der Fahrtroute führen.

Durch die gesunkene Kühlmitteltemperatur bei Steigungsbeginn dauert es ferner länger, bis eine maximal zulässige Kühlmitteltemperatur bei langen und/oder starken Steigungen erreicht wird. Dadurch kann der Zeitpunkt, an dem die verfügbare Motorleistung des Nutzfahrzeugs aufgrund der Erwärmung des Kühlmittels zwangsweise heruntergeregelt wird, verzögert werden. Dadurch verlängert sich die Zeit, in der das Nutzfahrzeug ohne unerwünschten zwangsweisen Leistungsabzug fahren kann, was nachfolgend auch als Fahrfähigkeit bezeichnet wird.

Ein weiterer Nachteil herkömmlicher Verfahren zur Steuerung oder Regelung von Kühlsystemvorrichtungen ist, dass derartige Verfahren veränderte Eigenschaften des Kühlsystems aufgrund von Verschleiß oder Verschmutzung nicht oder nur unzureichend berücksichtigen können.

Es ist somit eine Aufgabe der vorliegenden Erfindung, ein Verfahren zur Regelung oder Steuerung wenigstens einer Vorrichtung, die Teil eines Kühlsystems eines Fahrzeugs ist, bereitzustellen, mit dem Nachteile bekannter Verfahren vermieden werden können. Es ist insbesondere eine Aufgabe der Erfindung, ein Verfahren zur Regelung oder Steuerung einer solchen Vorrichtung bereitzustellen, das einen optimalen Kraftstoffverbrauch und/oder eine optimale Fahrfähigkeit des Fahrzeugs in unterschiedlichen Fahr- und Betriebssituationen ermöglicht. Es ist insbesondere eine weitere Aufgabe der Erfindung, ein Verfahren zur Regelung oder Steuerung einer solchen Vorrichtung bereitzustellen, mit dem veränderte Eigenschaften des Kühlsystems aufgrund von Verschleiß oder Verschmutzung berücksichtigt werden können.

Diese Aufgaben werden durch ein Verfahren gemäß den Merkmalen des Hauptanspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Erfindungsgemäß wird ein Verfahren zur Regelung oder Steuerung wenigstens einer Vorrichtung vorgeschlagen, die Teil eines Kühlsystems eines Fahrzeugs, insbesondere eines Nutzfahrzeugs, ist. Die Erfindung ist jedoch allgemein auf Regel- oder Steuerverfahren von Vorrichtungen anwendbar, die eine Energieeffizienz eines Fahrzeugbetriebs oder eines Antriebsstrangs beeinflussen.

Gemäß allgemeinen Gesichtspunkten der Erfindung wird eine neuronale Operationseinheit zur Regelung oder Steuerung der Vorrichtung bereitgestellt, wobei die neuronale Operationseinheit mittels eines künstlichen neuronalen Netzes (KNN) eingerichtet ist, einen Stellwert der Vorrichtung als Ausgangswert in Abhängigkeit von übermittelten Werten mehrerer Eingangsgrößen zu bestimmen. Die mehreren Eingangsgrößen umfassen wenigstens eine Fluidtemperatur des Kühlsystems und eine Topografie des vorausliegenden Fahrtroutenabschnitts des Fahrzeugs. Ferner werden die Knoten des künstlichen neuronalen Netzes basierend auf einer Korrelation zwischen den Werten der Eingangsgrößen und den Ausgangswerten vorgegeben, wobei die Korrelation durch Optimierung eines summarischen Energieverbrauchs des Fahrzeugs und/oder eine Fahrfähigkeit des Fahrzeugs ohne erwärmungsbedingte Leistungsdrosselung bestimmt wird. Der summarische Energieverbrauch, beispielsweise der Kraftstoffverbrauch bei einem Fahrzeug mit konventionellem Antrieb, und die Fahrfähigkeit des Fahrzeugs werden zumindest im vorausliegenden Fahrtroutenabschnitt, vorzugsweise über die gesamte Fahrtroute optimiert.

Es wurde vorstehend bereits erwähnt, dass unter der Optimierung der Fahrfähigkeit ohne erwärmungsbedingte Leistungsdrosselung eine Maximierung der Zeit oder Wegstrecke verstanden wird, während der das Fahrzeug ohne unerwünschten erwärmungsbedingten zwangsweisen Leistungsabzug fahren kann. Eine derartige Einschränkung der Fahrfähigkeit ist insbesondere bei Nutzfahrzeugen verbreitet und tritt bei längeren Steigungsfahrten auf, wenn aufgrund einer zu starken Erwärmung des Kühlsystems die Leistung des Fahrzeugs und damit auch die Geschwindigkeit des Fahrzeugs zwangsweise reduziert werden.

Unter einer neuronalen Operationseinheit wird eine Operationseinheit mit Eingängen und Ausgängen verstanden, die die Ausgangswerte in Abhängigkeit von den Eingangswerten genauso oder wenigstens mit einer zureichend geringen Abweichung wie das entsprechend künstliche neuronale Netz bestimmt. Eine solche Operationseinheit kann durch Software oder Hardware realisiert sein. Falls die Vorrichtung gesteuert wird, ist die neuronale Operationseinheit als neuronale Steuerung ausgebildet, und falls die Vorrichtung geregelt wird, ist die neuronale Operationseinheit als neuronaler Regler ausgebildet. Dem Fachmann sind verschiedene Realisierungsformen bekannt. Erfindungsgemäß ist die neuronale Operationseinheit Bestandteil des Reglers oder der Steuerung der zu regelnden bzw. zu steuernden Vorrichtung.

Ein besonderer Vorteil der erfindungsgemäßen Bereitstellung der neuronalen Operationseinheit ist, dass diese trainiert werden kann, für eine verbrauchsoptimierte und/oder fahrfähigkeitsoptimierte Regelung oder Steuerung der Vorrichtung unterschiedliche Topografieverläufe zu berücksichtigen. Ein besonderer Vorzug der Erfindung liegt somit darin, dass die neuronale Operationseinheit einen prädiktiven Regler oder Steuerung darstellt, der oder die eingerichtet ist, die erforderliche Stellgröße im Hinblick auf eine vorausliegende Fahrtroutentopografie vorherzusagen, um eine vorgegebene Zielgröße, beispielsweise den Kraftstoffverbrauch, zu optimieren. Ein derartig realisierter neuronaler Regler (bzw. neuronale Steuerung) für eine Vorrichtung, die Teil eines Fahrzeugkühlsystems ist, bietet gegenüber einem klassischen, auf einem physikalischen Modell basierenden Regler den Vorteil, dass das zeitliche Verhalten der zu regelnden Strecke im Hinblick auf unterschiedliche Fahrtroutentopografien richtig wiedergegeben wird. Der Aufwand, der für das Auftreten eines physikalischen Modells erforderlich ist, entfällt. Insbesondere kann der Regler bei Veränderungen an Betriebsparametern des Kühlsystems oder an dessen geänderte Eigenschaften aufgrund von Verschleiß und Verschmutzung durch einfaches Neutrainieren angepasst werden. Das neuronale Netz enthält eine dem Problem angepasste Struktur. Seine Parameter werden durch die bestimmte Korrelation zwischen den Werten der Eingangsgrößen und den Ausgangswerten automatisch bestimmt. Verfahren zum Trainieren und zur Implementierung des neuronalen Netzes sind für Regelungstechniker standardmäßig bekannt.

Der mathematische Zusammenhang zwischen den Werten der Eingangsgrößen und den Ausgangswerten wird im Rahmen einer Korrelationsanalyse bei Optimierung einer Zielfunktion ermittelt und zum Trainieren des KNN verwendet, wobei als Zielfunktion ein summarischer Kraftstoffverbrauch oder eine Fahrfähigkeit des Fahrzeugs im vorausliegenden Fahrtroutenabschnitt oder entlang der Fahrtroute vorgegeben werden kann. Im Rahmen der Erfindung besteht ferner die Möglichkeit, den summarischen Energieverbrauch und die Fahrfähigkeit jeweils als Teilziele bzw. als primäre und sekundäre Zielfunktionen mittels frei wählbarer Gewichtungsfaktoren zu einer gemeinsamen Zielfunktion zusammenzufassen und die vorgenannte Korrelation zwischen Eingangswerten und Ausgangswerten mittels einer multikriteriellen Optimierung zu bestimmen. Dadurch kann die Regelung oder Steuerung der Vorrichtung an verschiedene Einsatzszenarien oder Auslegungen von Fahrzeugen angepasst werden, so dass unterschiedliche Präferenzen bei der Priorisierung des Kraftstoffverbrauchs vs. der Fahrfähigkeit berücksichtigt werden können.

Eine Möglichkeit der erfindungsgemäßen Realisierung sieht vor, dass die Vorrichtung, die durch die neuronale Operationseinheit geregelt oder gesteuert wird, eine Kühlerjalousie ist, mit der während der Fahrt ein auf einen Kühler auftreffender Kühlluftstrom einstellbar ist.

Ferner kann die Vorrichtung ein Lüfter, eine Kühlmittelpumpe, eine Ölmittelpumpe, ein Kühlmittelventil des Hauptwasserthermostats oder ein Klimakompressor sein.

Ferner können in einem Fahrzeugkühlsystem mehrere oder jede dieser vorgenannten Vorrichtungen durch eine neuronale Operationseinheit gemäß der vorliegenden Erfindung gesteuert oder geregelt werden.

Zur Vereinfachung der Beschreibung wird die neuronale Operationseinheit nachfolgend auch als neuronaler Regler bezeichnet, ohne jedes Mal explizit zu erwähnen, dass die neuronale Operationseinheit auch als neuronale Steuerung ausgebildet sein kann. Die nachfolgenden Ausführungen sollen daher auch für neuronale Steuerungen gelten.

Der Korrelationszusammenhang zwischen den Werten der Eingangsgrößen und den Ausgangswerten kann basierend auf einem Fahrzeugmodell als Ergebnis einer Parameterstudie über mögliche Eingangswerte und Ausgangswerte ermittelt werden. Alternativ oder zusätzlich kann der Korrelationszusammenhang ferner aus experimentellen Daten, die mit einem Test-Fahrzeug für verschiedene Eingangswerte und Ausgangswerte gemessen werden, ermittelt werden.

Gemäß einer besonders bevorzugten Ausführungsform kann die neuronale Operationseinheit als selbstlernende neuronale Operationseinheit ausgebildet sein, die die ursprünglich vorgegebenen Knotenwerte anpassen kann. Dies bietet den besonderen Vorteil, dass sich die neuronale Operationseinheit an veränderte Eigenschaften der Vorrichtung, beispielsweise aufgrund von Verschleiß oder Verschmutzung, anpassen kann. Ferner können dadurch Ungenauigkeiten in den Daten, mit denen der Korrelationszusammenhang anfänglich bestimmt wurde, mit der Zeit korrigiert werden.

Vorzugsweise wird eine absolute Fahrzeugposition oder eine relative Fahrzeugposition entlang der Fahrtroute als eine Eingangsgrößen bereitgestellt. Es ist anzumerken, dass die relative Fahrzeugposition entlang der Fahrtroute auch als implizite Angabe in den bereitgestellten Topografiedaten enthalten sein kann, falls die Topografiedaten beispielsweise eine Angabe über eine vorausliegende Steigung enthalten und zugleich einen momentanen Abstand des Fahrzeugs von dieser Steigung angeben.

Besonders vorteilhaft ist es ferner, die Fahrzeuggeschwindigkeit als Eingangsgröße bereitzustellen. Dadurch kann der optimale Zeitpunkt und/oder Ort entlang des vorausliegenden Fahrtroutenabschnitts genauer bestimmt werden, an dem beispielsweise ein Ausgangswert der neuronalen Operationseinheit im Hinblick auf eine vorausliegende Steigung geändert werden soll. Der prädiktive Regler kann auf diese Weise somit die Echtzeit als Determinante des Ausgangssignals berücksichtigen.

Eine weitere Möglichkeit der erfindungsgemäßen Realisierung sieht vor, dass die Eingangsgröße eine übermittelte Ausgangsgröße mindestens einer weiteren neuronalen Operationseinheit umfasst. Gemäß dieser Variante besteht somit die Möglichkeit, die neuronalen Operationseinheiten untereinander zu vernetzen, so dass bei der Bestimmung des Ausgangswerts einer neuronalen Operationseinheit ein momentaner Ausganswert einer oder mehrerer anderer Operationseinheiten als Eingangswert eingeht. Dadurch können die Wechselwirkungen in einem dynamischen System besser berücksichtig werden und die Genauigkeit der Regelung verbessert werden.

Eine Antriebsvorrichtung und die verschiedenen Fluidströme zur Kühlung der Antriebsvorrichtung bilden ein komplexes thermodynamisches System, wobei sich die Veränderung einer Stellgröße einer Vorrichtung des Kühlsystems auf eine Vielzahl von anderen Vorrichtungen des Kühlsystems auswirkt und vice versa. Zur Verbesserung der Genauigkeit ist es daher vorteilhaft, den Korrelationszusammenhang zwischen den Werten der Eingangsgröße und den möglichen Ausgangswerten einer Vorrichtung auf möglichst viele Eingangsgrößen zu basieren, die die Ausgangsgröße der Vorrichtung beeinflussen können, wobei die spezifische Auswahl von Eingangsgrößen für jede der Vorrichtung unterschiedlich sein kann. Die jeweilige Auswahl von Eingangsgrößen für eine Vorrichtung kann wiederum, wie vorstehend erwähnt, mittels einer Parameterstudie oder aus experimentellen Daten bestimmt werden.

Nachfolgend sind einige besonders vorteilhafte derartige Eingangsgrößen aufgeführt, für die im Rahmen der Erfindung festgestellt wurde, dass sie die Vorhersagegenauigkeit der neuronalen Operationseinheit für eine Vielzahl unterschiedlicher Vorrichtungen verbessern.

Die Eingangsgrößen können eine Umgebungstemperatur, einen Umgebungsdruck, eine Motorlast, eine Getriebelast und/oder ein Fahrzeuggewicht umfassen. Ferner können verschiedene Temperaturangaben als Eingangsgrößen verwendet werden, wie beispielsweise eine Temperatur der Ladeluft, des Motoröls, des Getriebeöls und/oder einer Kühlluft im Fahrgastraum. Besonders vorteilhaft als Eingangsgröße ist eine Fluidtemperatur nach Austritt des Fluids aus einem Niedertemperatur-Wärmeübertrager des Niedertemperaturkreislaufs, eine Fluidtemperatur zwischen einem Hauptthermostat und dem Hochtemperaturkühler, eine Fluidtemperatur nach Austritt des Fluids aus der Brennkraftmaschine und/oder eine Fluidtemperatur der Ladeluft zwischen dem Hochtemperatur-Wärmeübertrager und einer Mischkammer.

Es ist ferner vorteilhaft, eine Echtzeiteingabe als Eingangsgröße bereitzustellen, beispielsweise eine CPU-Zeit, die von einer Motorsteuereinheit oder Antriebsstrangsteuereinheit bereitgestellt wird, mittels der der Zeitpunkt der Anpassung des Ausgangswerts der Vorrichtung genauer ermittelt werden kann. Derartige Zeitangaben können mit Ausgangswerten korrelieren und beispielsweise in der Korrelationsmatrix definiert eingegeben sein.

Gemäß einer bevorzugten Ausführungsvariante kann die bestimmte Korrelation zwischen den Werten der Eingangsgrößen und den Ausgangswerten als Korrelationsmatrix in der neuronalen Operationseinheit hinterlegt werden, wobei die neuronale Operationseinheit eingerichtet ist, die Zwischenwerte der Korrelationsmatrix zu interpolieren.

Mit anderen Worten können Ausgangswerte der neuronalen Operationseinheit auf Basis der Korrelationsmatrix interpoliert werden, falls ein oder mehrere Werte der Eingangsgröße zwischen den in der Korrelationsmatrix vorgegebenen Werten für die Eingangsdaten liegen. Ferner besteht auch die Möglichkeit, Ausgangswerte zu extrapolieren, falls die empfangenen Eingangswerte Werte aufweisen, die größer oder kleiner als die minimalen bzw. maximalen in der Korrelationsmatrix hinterlegten Eingangswerte sind.

Es wird betont, dass im Rahmen der Erfindung auch die Möglichkeit besteht, statt einer Korrelationsmatrix den Korrelationszusammenhang als Funktionen vorzugeben, die in den Knoten des neuronalen Netzes als sogenannte Aktivierungsfunktionen hinterlegt sind. Dies hat den Vorteil, dass Zwischenwerte von Eingangswerten nicht interpoliert, sondern direkt anhand der hinterlegten Funktionen bestimmt werden können.

Es wurde vorstehend bereits erwähnt, dass die neuronale Operationseinheit als selbstlernende neuronale Operationseinheit ausgebildet ist, die die ursprünglich vorgegebenen Knotenwerte anpassen kann. Im Falle einer Korrelationsmatrix können somit die einzelnen Zeilen- und Spaltenwerte der in den Knoten hinterlegten Matrixwerten angepasst werden, falls die neuronale Operationseinheit lernt, dass ein hinterlegter Korrelationszusammenhang beispielsweise zu einem Überschreiten einer vorgegebenen Temperaturgrenze etc. führen würde. Im Falle von in den Knoten hinterlegten Aktivierungsfunktionen können im Falle einer selbstlernenden neuronalen Operationseinheit die Aktivierungsfunktionen angepasst werden. Verfahren zur Ausbildung der neuronalen Operationseinheit als selbstlernende Operationseinheit sind für den Regelungstechniker standardmäßig bekannt.

Die Topografie eines vorausliegenden Fahrtroutenabschnitts kann als Steigung-/Gefälle-Information und Länge des vorausliegenden Streckenabschnitts oder als relative Höheninformation bereitgestellt werden. Die Topografiedaten können beispielsweise von einem Navigationssystem oder von einer Topografiedaten-Speichereinrichtung bereitgestellt werden. Vorteilhafterweise wird beim Fahrbetrieb die aktuelle Fahrtzeitposition und/oder Fahrtrichtung der gespeicherten Topografie der Fahrtroute zugeordnet.

Ein weiterer Aspekt der Erfindung betrifft ein Fahrzeug, insbesondere ein Nutzfahrzeug, mit mindestens einer neuronalen Operationseinheit nach einem der vorhergehenden Aspekte.

Weitere Einzelheiten und Vorteile der Erfindung werden im Folgenden unter Bezug auf die beigefügten Zeichnungen beschrieben. Es zeigen
- Figur 1: einen schematischen Aufbau eines Kühlsystems eines Fahrzeugs mit mehreren neuronalen Reglern und/oder Steuerungen gemäß einem Ausführungsbeispiel;
- Figur 2: eine Steuerung einer Kühlerjalousie mit einer neuronalen Operationseinheit gemäß einem Ausführungsbeispiel;
- Figur 3: beispielhaft einen vereinfachten Ausschnitt einer in der operationalen Operationseinheit hinterlegten Korrelationsmatrix gemäß einem Ausführungsbeispiel; und
- Figur 4: schematisch ein künstliches neuronales Netz gemäß einem Ausführungsbeispiel.

Die Erfindung kann zur Regelung oder Steuerung von Vorrichtungen eingesetzt werden, die Teil eines Kühlsystems eines Fahrzeugs, insbesondere eines Nutzfahrzeugs, sind, und/oder zur Regelung oder Steuerung von Vorrichtungen, die eine Energieeffizienz eines Fahrzeugbetriebs beeinflussen. Die Erfindung ist dabei hinsichtlich des konstruktiven Aufbaus der Antriebsvorrichtung oder des Kühlsystems nicht auf einen bestimmten Aufbau beschränkt. Allerdings kann die Antriebsvorrichtung verschiedene Komponenten umfassen, die nachfolgend kurz beschrieben werden.

Die Brennkraftmaschine 42 ist im vorliegenden Ausführungsbeispiel als sechszylindrischer Großdieselmotor eines Nutzfahrzeugs mit einer Kraftstoff-Luft-Zuführung sowie einem Ladeluft- und Abgassystem ausgeführt. Das Abgassystem umfasst ferner eine Abgasrückführung (AGR) und einen Abgasturbolader (ATL).

Nachfolgend werden zunächst die Motor- und Ladeluftkühlung, die Ladeluftzuführung sowie das Abgassystem der Antriebsvorrichtung, die in herkömmlicher Weise ausgeführt sind, kurz beschrieben.

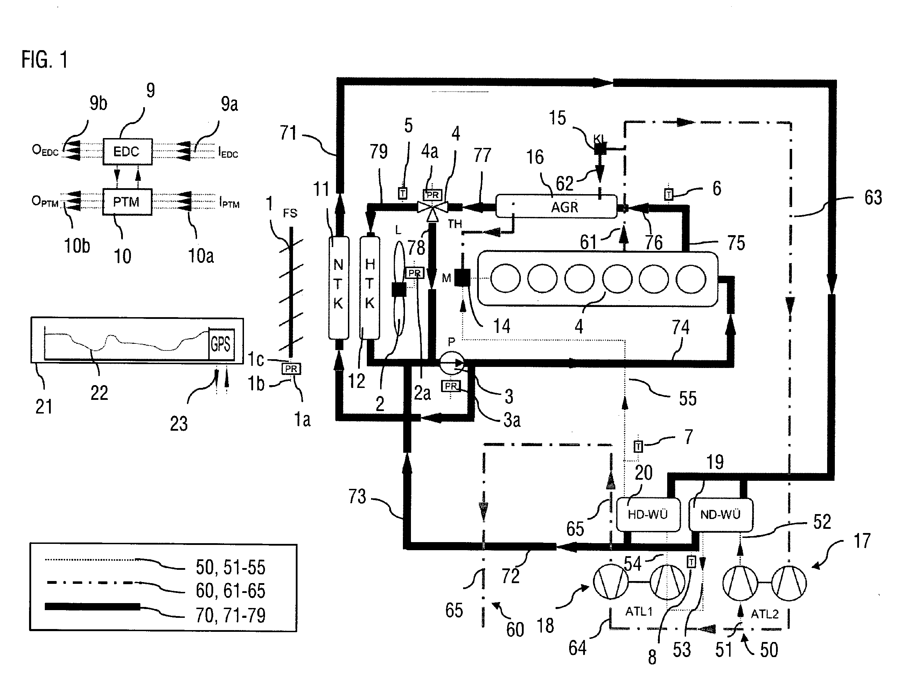

Figur 1 zeigt ein beispielhaft ausgeführtes Kraftfahrzeugkühlsystem, wie es beispielsweise in modernen Nutzfahrzeugen, insbesondere in Lastkraftwagen und Omnibussen, zum Einsatz kommt. Die dicke durchgezogene Linie 70 zeigt hierbei den Strömungsweg des Kühlmittels bzw. die Kühlmittelleitungen, wobei einzelne Strömungsabschnitte mit den Bezugszeichen 71 - 79 hervorgehoben sind. Das Kühlsystem weist einen ersten als Hochtemperaturkreislauf ausgelegten Kühlkreislauf auf und einen zweiten als Niedertemperaturkreislauf ausgelegten Kühlkreislauf, der mit dem ersten Kühlkreislauf fluidisch verbunden ist. Der Hochtemperaturkreislauf umfasst im Wesentlichen die Abschnitte 74 - 79, während der Niedertemperaturkreislauf die Abschnitte 71 - 73 umfasst.

Über die beiden Strömungswege wird über die Kühlmittelförderpumpe 3 ein Kühlmittel umgewälzt. Bei dem Kühlmittel kann es sich um Wasser handeln oder beispielsweise auch um ein Gemisch aus Wasser und einem Glykol, wobei das Glykol die Verdampfungstemperatur des Gemisches gegenüber reinem Wasser anhebt.

Die Kühlmittelförderpumpe 3 fördert, sobald sie eingeschaltet wird, in Abhängigkeit der Motordrehzahl ein Kühlmittelstrom durch den Kühlmittelkreislauf. Das Kühlmittel im Hochtemperaturkreislauf durchströmt den motorseitigen Hochtemperaturkühler 12, während das Kühlmittel im Niedertemperaturkreislauf einen Niedertemperaturkühler 11 durchströmt.

Ferner ist ein Hauptwasserthermostat vorgesehen, aufweisend das Kühlmittelventil 4 und den korrespondierenden Regler 4a für das Ventil, der die Temperatur des Kühlmittels überwacht. Der Hauptwasserthermostat ist ferner eingerichtet, das Kühlmittel durch den Abschnitt 78 statt durch den Abschnitt 79 und den Hochtemperaturkühler 12 zu leiten, wenn eine vorbestimmte Mindesttemperatur des Kühlmittels noch nicht erreicht ist, beispielsweise zu Beginn des Fahrbetriebs.

In dem Hochtemperaturkühlkreislauf sind die Brennkraftmaschine 42, der Wärmeübertrager 16 (Wärmeübertrager der Abgasrückführung), die Kühlmittelpumpe 3 und ein luftgekühlter Hochtemperaturkühler 12 hydraulisch und thermisch eingebunden.

Im Hochtemperaturkreislauf wird das Kühlmittel über den Abschnitt 74 in den Motorblock bzw. den Zylinderkopf, das Kurbelgehäuse und in den im Kurbelgehäuse integrierter Ölkühler geleitet, um dort die Komponenten zu kühlen.

Das so erwärmte Kühlmittel tritt aus dem Motorblock bzw. dem Kurbelgehäuse aus und ist über den Leitungsabschnitt 75 fluidisch eingangsseitig mit dem Wärmeübertrager 16 der Abgasrückführung verbunden. Über den Leitungsabschnitt 77 wird das Kühlmittel anschließend zum Hauptthermostat 4, 4a zurückgeführt und je nach Stellung des Hauptthermostats durch den Leitungsabschnitt 79 in den Hochtemperaturkühler 12 oder in die Bypassleitung 78 geleitet.

Über ein Kühlmittelverteiler/-regelventil (nicht dargestellt) nach der Umwälzpumpe 3 kann das Kühlmittel in den Niedertemperaturkreislauf strömen und in den Niedertemperaturkühler 11 geleitet werden, wo das Kühlmittel mittels Umgebungsluft gekühlt wird.

Der Leitungsabschnitt 71 verbindet das aus dem Niedertemperaturkühler 11 austretende Kühlmittel über die Leitung 71 fluidisch mit einem indirekten Ladeluftkühler, der vorliegend beispielhaft einen Hochdruck-Wärmeübertrager 19 und einen nachgeordneten Niederdruck-Wärmeübertrager 20 umfasst. Der im Niedertemperaturkühler abgekühlte Kühlmittelteilmassenstrom der Motorkühlung wird somit auch zur Kühlung der mittels der Abgasturbolader komprimierten Ladeluft verwendet. Die beim Komprimieren der Ladeluft erzeugte Wärme erwärmt das Kühlmittel in dem Hochdruck-Wärmeübertrager 19 (über Leitungsabschnitt 72) und dem Niederdruck-Wärmeübertrager 20 des Ladeluftstrangs und erzeugt dadurch einen Abwärmestrom der Ladeluftkühlung. Danach strömt das Kühlmittel über den Leitungsabschnitt 73 zurück in den Leitungsabschnitt, der eingangsseitig an der Kühlmittelpumpe 3 angeordnet ist.

Der Ladeluftstrang 50 ist in Figur 1 durch die gepunktete Linie dargestellt. Bei der in Figur 1 dargestellten Antriebseinheit wird aus der Umgebung die für die Verbrennung in der Brennkraftmaschine 42 benötigte Ladeluft angesaugt, was durch die Leitungen 50 für die Ladeluftzufuhr mit den Teilabschnitten 51 - 55 dargestellt ist.

Hierbei wird Umgebungsluft im Abschnitt 51 angesaugt und anschließend in zwei Stufen mit einem ersten Abgasturbolader 17 und einem zweiten Abgasturbolader 18 verdichtet. Jeder Abgasturbolader weist dabei eine Abgasturbine auf, die in einem mit einem Abgasausgang des Verbrennungsmotors 42 in Fluidverbindung zu bringenden Abgasstrang 63 angeordnet ist und einen mit der Abgasturbine in Drehantriebsverbindung stehenden Verdichter, der in einem mit einem Lufteingang des Verbrennungsmotors 42 in Fluidverbindung zu bringenden Ladeluftstrang 51 bzw. 53 angeordnet ist. Die Verdichtung der Ladeluft in zwei Stufen ermöglicht das Abkühlen der Ladeluft sowohl in dem vorgenannten Hochdruck-Wärmeübertrager 19 nach dem Austritt aus dem ersten Abgasturbolader 17 sowie anschließend in dem zweiten Niederdruck-Wärmeübertrager 20 nach dem Austritt des Abgases aus dem zweiten Abgasturbolader 18.

Nachdem die Ladeluft den Ladeluftkühler 20 verlassen hat, wird sie über die Leitung 55 der Mischkammer 14 zugeführt, in der ein Teil des Abgases, das die Brennkraftmaschine 42 bereits verlassen hat und über die Abgasrückführung 62 der Mischkammer 14 zugeführt wird, beigemischt wird. Dieses Abgas-Ladeluftgemisch wird dann dem Verbrennungsraum der Brennkraftmaschine 42 zugeführt.

Der Abgasstrang der Brennkraftmaschine ist mit der strichgepunkteten Linie 60 dargestellt. Es wurde vorstehend bereits erwähnt, dass die Antriebsvorrichtung eine Abgasrückführung umfasst. Über eine steuerbare Klappe 15 der Abgasrückführung wird ein Teil des Abgases, das die Brennkraftmaschine bereits verlassen hat, einem Abgaskühler 9 zugeführt und dort abgekühlt. Das Abgas wird anschließend der zuvor beschriebenen Mischkammer 14 zugeführt, wo das rückgeführte Abgas der Ladeluft beigemischt wird. Der Teil des Abgases, der nicht in die Abgasrückführung abgezweigt wird, wird über die Abgasleitung 63 der Turbine des ersten Abgasturboladers 17 und anschließend über die Leitung 64 der Turbine des zweiten Abgasturboladers 18 zugeführt.

Nach Verlassen des zweiten Turboladers 18 wird das Abgas über die Leitung 65 an die Umgebung abgegeben.

Das in Figur 1 gezeigte Kühlsystem umfasst ferner eine Kühlerjalousie 1, mit der während der Fahrt ein auf den Kühler 11 auftreffender Kühlluftstrom einstellbar ist. Die Kühlerjalousie 1 kann beispielsweise in eine geschlossene Stellung gebracht werden, was den Luftwiderstandsbeiwert drückt, und in eine offene Stellung gebracht werden, um die auf den Kühler 11 auftreffende Kühlluft zu erhöhen. Hierzu wird die Stellung der Kühlerjalousie 1 durch eine Steuervorrichtung 1 a gesteuert, die durch eine neuronale Operationseinheit ausgebildet ist. Der neuronalen Steuerung 1 a werden mit bestimmter Frequenz die Werte der Eingangsgrößen über eine Signalleitung 1 b übermittelt. Der in Abhängigkeit der Werte der Eingangsgrößen ermittelte Ausgangswert der Steuereinheit 1a wird z. B. über eine Signalleitung 1c als Stellwert an einen das Stellglied bildenden Hydraulik- oder Pneumatikzylinder (nicht gezeigt) ausgegeben.

Zwischen dem Hochtemperaturkühler 12 und der Brennkraftmaschine 42 ist ein Lüfter 2 angeordnet, der von einem neuronalen Regler 2a geregelt wird. Ferner ist der Hauptwasserthermostat 4 mit einem neuronalen Regler 4a ausgestattet, und die Kühlmittelpumpe 3a wird ebenfalls von einem neuronalen Regler 3a geregelt.

Die Eingangssignalleitungen und Ausgangssignalleitungen für die neuronalen Regler 2a, 3a und 4a sind wiederum mit gepunkteten Linien dargestellt, wobei aus Gründen der besseren Übersichtlichkeit die Bezugszeichen weggelassen wurden.

Jeder der neuronalen Regler oder Steuerungen 1a - 4a ist mit einer neuronalen Operationseinheit ausgestattet, die mittels eines künstlichen neuronalen Netzes eingerichtet ist, einen Stellwert der jeweils zugeordneten Vorrichtung 1, 2, 3 oder 4 als Ausgangswert in Abhängigkeit von übermittelten Werten mehrerer Eingangsgrößen zu bestimmen.

Hierzu ist in jedem der neuronalen Regler 1 - 4 eine an den Regler angepasste Korrelationsmatrix hinterlegt, die die Knoten des neuronalen Netzes ausbildet und den mathematischen Zusammenhang zwischen den Werten der Eingangsgrößen und dem Ausgangswert des jeweiligen Reglers festlegt.

Es wurde vorstehend bereits erwähnt, dass die Werte der Korrelationsmatrix beispielsweise aus einer Simulation als Ergebnis einer vollständigen Parameterstudie über alle möglichen Eingangsgrößen und gewünschten Ausgangsgrößen oder aus einem Experiment mittels einer Fahrzeugmessung bestimmt werden können. Jeder Regler kann somit in Abhängigkeit seiner Korrelationsmatrix ein angepasstes Set an Eingangsgrößen erhalten. Zur Bereitstellung der sensorisch erfassten Eingangsgrößen wird im vorliegenden Beispiel die Motorsteuereinheit 9 und die Antriebsstrangsteuereinheit 10 genutzt, was in Figur 1 lediglich schematisch dargestellt ist.

So ist das Motorsteuergerät 9 typischerweise eingerichtet, eingangsseitig momentane Messwerte einer Vielzahl motorrelevanter Parameter wie beispielsweise die Kühlmittel-, Ladelufttemperatur, Massenströme etc. zu empfangen. Derartige Eingangsgrößen I_{EDC} sind in Figur 1 mit den Bezugszeichen 9a dargestellt. Ebenfalls ist ein Antriebsstrangsteuergerät 10 typischerweise eingerichtet, eingangsseitig momentane Messwerte einer Vielzahl verschiedene Eingangsgrößen I_{PTM} 10a zu empfangen, die für die Regelung des Antriebsstrangs vonnöten sind, beispielsweise eine Fahrzeuggeschwindigkeit, eine Umgebungstemperatur etc.. Das Motorsteuergerät 9 und das Antriebsstrangsteuergerät 10 sind vorliegend eingerichtet, die von den neuronalen Reglern 1a - 4a benötigten Eingangssignale ihrerseits ausgangsseitig auszugeben, was in Figur 1 mit den Bezugszeichen 9b und 10b bezeichnet ist.

Es wurde vorliegend bereits erwähnt, dass jedem Regler ein unterschiedliches Set an Eingangsgrößen übermittelt wird. Die jeweilige Auswahl von Eingangsgrößen für eine bestimmte zu regelnde Vorrichtung 1, 2, 3 oder 4 wurde vorab mittels einer Parameterstudie oder aus experimentellen Daten bestimmt. Hierbei ist jedoch jedem der Regler 1 - 4 gemein, dass dieser verschiedene Fluidtemperaturen des Kühlsystems und eine Topografie eines vorausliegenden Fahrtroutenabschnitts des Fahrzeugs als Eingangssignal übermittelt bekommt.

In Figur 1 ist wiederum lediglich schematisch eine Navigationsvorrichtung 21 dargestellt, die eine Topografie 22 eines vorausliegenden Fahrtroutenabschnitts ermittelt und diese Topografieinformation als Topografiedaten 23 ebenfalls über Signalleitungen den neuronalen Reglern 1a - 4a bereitstellt. Zur Bereitstellung aktueller Fluidtemperaturen des Kühlsystems sind, beispielsweise im vorliegenden Ausführungsbeispiel verschiedene Temperaturmessstellen 5 bis 8 vorgesehen. Ein erster Temperatursensor 5 misst eine Temperatur des Kühlmittels nach dem AGR- Kühler (vor dem Hochtemperaturkühler). Eine weitere Messstelle 6 misst eine Temperatur des Kühlmittels nach Austritt aus der Brennkraftmaschine 42 und vor Eintritt in den AGR- Kühler (16). Eine weitere Messstelle 7 misst eine Temperatur der Ladeluft nach Austritt aus dem Hochdruck-Wärmeübertrager 20, und eine Messstelle 8 misst eine Temperatur des Kühlmittels im Niedertemperaturkreislauf nach Austritt aus dem Niederdruck-Wärmeübertrager 19.

Die momentanen Messwerte dieser Temperatursensoren 5 bis 8, die Topografiedaten 23, eine Umgebungstemperatur, eine Fahrzeuggeschwindigkeit, eine Fahrzeugposition, eine Temperatur im Fahrerhaus und weitere Betriebsdaten werden den einzelnen neuronalen Reglern 1a - 4a eingangsseitig mit einer vorbestimmten Frequenz als Eingangsimpuls zur Verfügung gestellt.

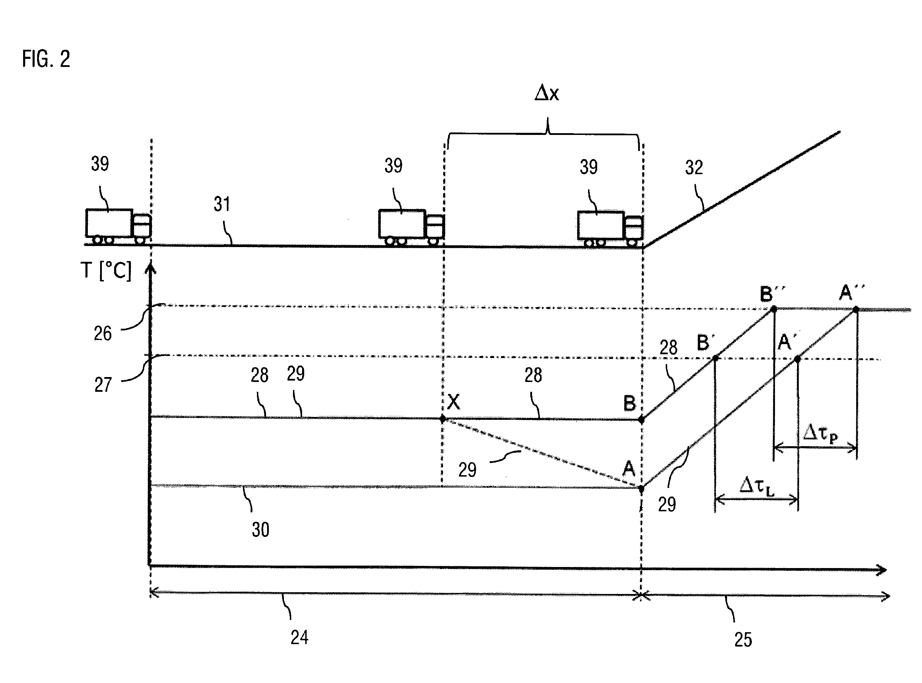

Figur 2 illustriert nachfolgend beispielhaft die Steuerung der Kühlerjalousie 1 mit der neuronalen Steuerung 1 a. Hierzu illustriert Figur 2 beispielhaft die Fahrt eines LKWs 39 entlang eines vorausliegenden Fahrtroutenabschnitts, bestehend aus einem ebenen Abschnitt 31, gefolgt von einer Steigung 32. Die Kurve 29 gibt die Kühlmitteltemperatur des Fahrzeugs in Abhängigkeit von der Position entlang des vorausliegenden Fahrtroutenabschnitts 31, 32 an, wenn die Fahrzeugjalousie 1 mit einer neuronalen Operationseinheit 1 a gesteuert wird. Die Kurve 28 gibt dagegen die Kühlmitteltemperatur an, wenn die Kühlerjalousie mit einer herkömmlichen Steuerung basierend auf einem physikalischen Fahrzeugmodell und einfachen WENN-DANN-Regeln gesteuert wird. Die mit den Bezugszeichen 30 gekennzeichnete Vergleichskurve gibt den Temperaturverlauf des Kühlmittels für ein Fahrzeug ohne Kühlerjalousie an.

Die strichgepunktete Linie 26 kennzeichnet eine vorgegebene maximale Kühlmitteltemperatur. Die strichgepunktete Linie 27 kennzeichnet die Lüfter-Set-Point-Temperatur, d. h. die Temperatur des Kühlmittels, bei dem der Lüfter 2 zugeschaltet werden muss.

Der Abschnitt 24 kennzeichnet ferner einen Betrieb des LKWs 39 in Teillast, während der Abschnitt 25 einen Betrieb des LKWs in Volllast kennzeichnet. Typischerweise erfolgt bei der Fahrt in der Ebene ein Teillastbetrieb, während bei einer stärkeren Steigung eine Fahrt im Volllastbetrieb erfolgt.

Bei einer herkömmlich gesteuerten Kühlerjalousie 1, gekennzeichnet durch die Kurve 28, ist die Kühlerjalousie in Teillastbetrieb 24 geschlossen, um den Strömungswiderstand des Fahrzeugs zu reduzieren. Im Vergleich zu einem Fahrzeug ohne Kühlerjalousie, gekennzeichnet durch die Kurve 30, ist somit die Kühlmitteltemperatur 28 bei geschlossener Kühlerjalousie erhöht, da kein zusätzlicher Kühlluftstrom auf den Kühler trifft. Im Volllastbetrieb wird die Kühlerjalousie dann geöffnet. Trotz des durch die geöffnete Kühlerjalousie erhöhten, auf den Kühler 11 auftreffenden Luftstroms erfolgt aufgrund der Steigung 32 ein Anstieg der Kühlmitteltemperatur. In Punkt B' wird dann die Zuschalttemperatur 27 des Lüfters 2 erreicht und dieser zugeschaltet. Bei längeren und starken Steigungen wird schließlich in Punkt B" die maximale Kühlmitteltemperatur 26 erreicht, woraufhin die Antriebsleistung des Fahrzeugs zwangsweise reduziert wird, um eine Überhitzung des Kühlmittels zu vermeiden, und die Kühlmitteltemperatur den Maximalwert 26 nicht überschreitet, was durch den horizontalen Verlauf zwischen B" und A" illustriert ist.

Die Kurve 29 zeigt dagegen den Kühlmitteltemperaturverlauf bei einem Fahrzeug, bei dem die Kühlerjalousie 1 mit einer neuronalen Operationseinheit 1 a gemäß der vorliegenden Erfindung gesteuert wird. Die neuronale Operationseinheit wurde basierend auf der hinterlegten Korrelationsmatrix vorab trainiert, den Temperaturanstieg des Kühlmittels bei langen und starken Steigungen aufgrund der jeweils übermittelten aktuellen Topografiedaten rechtzeitig vorherzusagen. Hierzu werden der neuronalen Operationseinheit 1 a der Kühlerjalousie 1, wie vorstehend beschrieben, Topografiedaten des vorausliegenden Fahrtroutenabschnitts übermittelt, beispielsweise eine Angabe betreffend den durchschnittlichen Steigungsgrad und Länge der Steigung 32 sowie die aktuelle Fahrzeugposition und Fahrgeschwindigkeit des Fahrzeugs 39.

Die neuronale Operationseinheit 1 a bestimmt dann in Abhängigkeit dieser Daten und der weiteren übermittelten Eingangsgrößen, wie beispielsweise der aktuellen Kühlmitteltemperatur, anhand der hinterlegten Korrelationsmatrix die Stellen entlang des vorausliegenden Fahrtroutenabschnitts 31, 32, an denen die Kühlerjalousiestellung verändert wird, um den summarischen Kraftstoffverbrauch und die Fahrfähigkeit entlang des Fahrtroutenabschnitts 31, 32 zu optimieren. Beispielsweise wird der Punkt X bestimmt, an dem die Kühlerjalousie 1 von einer geschlossenen in eine offene Stellung umgeschaltet wird. Daraufhin sinkt die Kühlmitteltemperatur bis zum Erreichen des Punktes A am Beginn der Steigung 32.

Im Unterschied zu der herkömmlichen Steuerung der Kühlerjalousie (Kurve 28) fährt somit das Fahrzeug mit einer reduzierten Kühlertemperatur in die Steigung 32 ein. Dadurch wird die Zuschalttemperatur 27 des Lüfters erst in Punkt A', also später als bei dem Punkt B' erreicht. Dadurch kann in der Steigung länger ohne einen energieverbrauchenden Lüfter gefahren werden, was trotz des etwas höheren Energieverbrauchs in der Ebene zu einem insgesamt reduzierten Energieverbrauch führt. Ferner wird auch die maximale Kühlmitteltemperatur 26 in einem späteren Punkt A" entlang der Steigung 32 erreicht, so dass das Fahrzeug länger ohne unerwünschten Leistungsabzug in der Steigung fahren kann. Die gewonnene Verzögerung bei der Zuschaltung des Lüfters ist in Figur 2 mit Δτ_{L} gekennzeichnet und die Verzögerung bei Erreichen der maximalen Kühlmitteltemperatur mit Δτₚ.

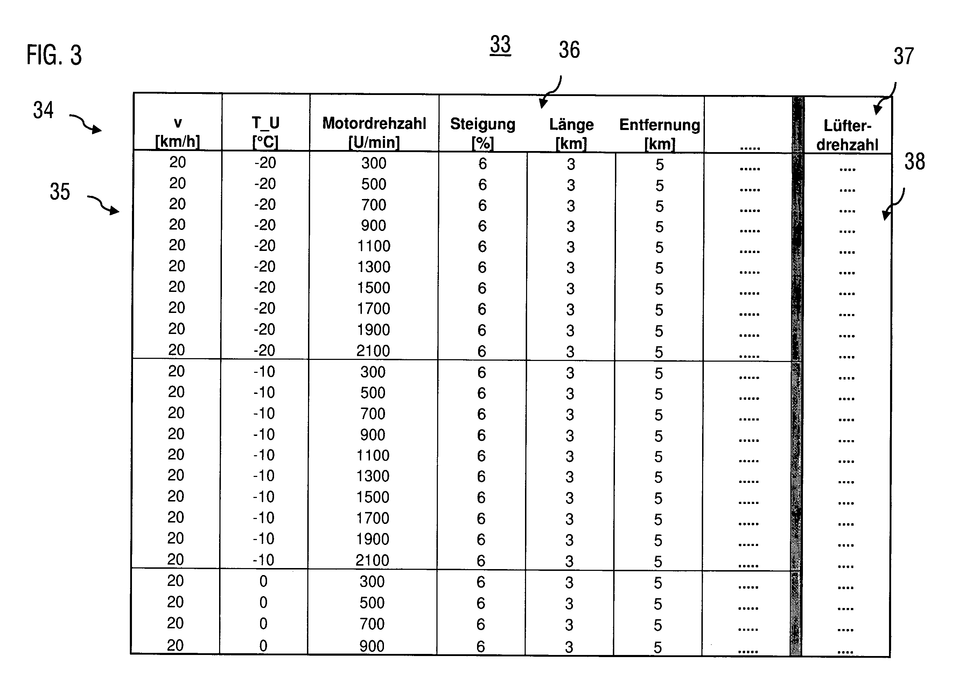

Figur 3 zeigt beispielhaft und lediglich ausschnittsweise eine Korrelationsmatrix 33 eines neuronalen Reglers 2a des Lüfters 2. Die Korrelationsmatrix 33 legt für verschiedene diskrete Betriebspunkte des Fahrzeugs, d. h. für die möglichen Kombinationen der Eingangswerte 35 der Eingangsgrößen 34, einen entsprechenden Ausgangswert der Lüfterdrehzahl 37 als Ausgangsgröße fest.

Hierbei ist anzumerken, dass zur Vereinfachung der Darstellung nur eine kleine Zahl der verschiedenen Eingangsgrößen 34 in Figur 3 dargestellt ist, vorliegend beispielsweise die Fahrzeuggeschwindigkeit v, die Umgebungstemperatur T_U, die Motordrehzahl sowie Topografiedaten 36 in Form eines Steigungsgrad, einer Länge der Steigung und einer Entfernung bis zum Beginn der Steigung.

Die lediglich mit Punkten gekennzeichnete vorletzte Spalte soll einen Platzhalter für die weiteren Eingangsgrößen, z. B. die verschiedenen Temperaturen der Messstellen 5 bis 8, eine Temperatur im Fahrerhaus, eine Motorlast, eine Getriebelast, ein Fahrzeuggewicht etc. darstellen. Für vorab festgelegte mögliche diskrete Betriebspunkte jeder Eingangsgröße, was vorliegend für die Motordrehzahl beispielsweise durch die Werte 300 bis 2100 dargestellt ist, gibt die Korrelationsmatrix alle möglichen Kombinationen aller Betriebspunkte der hinterlegten Eingangsgrößen an. Der vorgegebene Temperaturbereich der Umgebungstemperatur kann beispielsweise sich von -20 Grad bis +40 Grad erstrecken, was in Figur 3 lediglich durch die Werte -20, -10 und 0 angedeutet ist. Die Korrelationsmatrix 33 ordnet auf diese Weise für jeden möglichen Betriebspunkt, entsprechend einer möglichen Kombination von Eingangswerten aller Eingangsgrößen einen entsprechenden Ausgangswert 38 zu.

Die einzelnen Zeilen und Spalten einer solchen Korrelationsmatrix 33 stellen die Knoten des künstlichen neuronalen Netzes dar. Haben die Eingangswerte einen Wertebereich, der nicht eindeutig den diskreten Werten der Korrelationsmatrix zuzuordnen ist, beispielsweise bei einer Motordrehzahl von 350 Umdrehungen pro Minute, wenn der Wertebereich der Motordrehzahl nur in 200er Schritten in der Matrix hinterlegt ist, oder bei einer Steigung von 6,5 Grad, wenn der Wertebereich einer Steigung nur in 1-Grad-Schritten hinterlegt ist, ist die neuronale Operationseinheit eingerichtet, die Zwischenwerte basierend auf den vorhandenen Matrixwerten zu interpolieren.

Für das Beispiel der Figur 2 kann eine entsprechend angepasste Korrelationsmatrix (nicht gezeigt) in der neuronalen Operationseinheit 1a der Kühlerjalousie 1 hinterlegt sein, die als Ausgangsgröße nicht die Lüfterdrehzahl, sondern entsprechend eine Stellgröße für die Kühlerjalousie ausgibt. In einer derartigen Matrix kann beispielsweise hinterlegt sein, dass bei einer vorgegebenen Fahrgeschwindigkeit mit einer bestimmten Steigung ab einer bestimmten Entfernung vor Beginn der Steigung die Kühlerjalousie von geschlossen auf offen umgestellt wird.

Es wird nochmals betont, dass die Darstellung in Figur 3 lediglich als beispielhaft zu sehen ist und dass die vorgegebenen diskreten Betriebspunkte beliebig genau vorgegeben werden können, beispielsweise in Schritten von 1 Stundenkilometer oder 0,1 Stundenkilometern für die Fahrzeuggeschwindigkeit oder 1-Grad-Schritten oder 1/10-Grad-Schritten für die verschiedenen Temperaturgrößen etc..

Eine selbstlernende Funktion der neuronalen Operationseinheit bedeutet, dass die in Figur 3 beispielhaft gezeigten Werte der Korrelationsmatrix nachträglich angepasst werden können, falls die neuronale Operationseinheit beispielsweise feststellt, dass mit den den Eingangswerten zugeordneten Ausgangswerten beispielsweise eine gewünschte Kühlmitteltemperatur nicht erreicht oder eine vorgegebene Grenze überschritten wird.

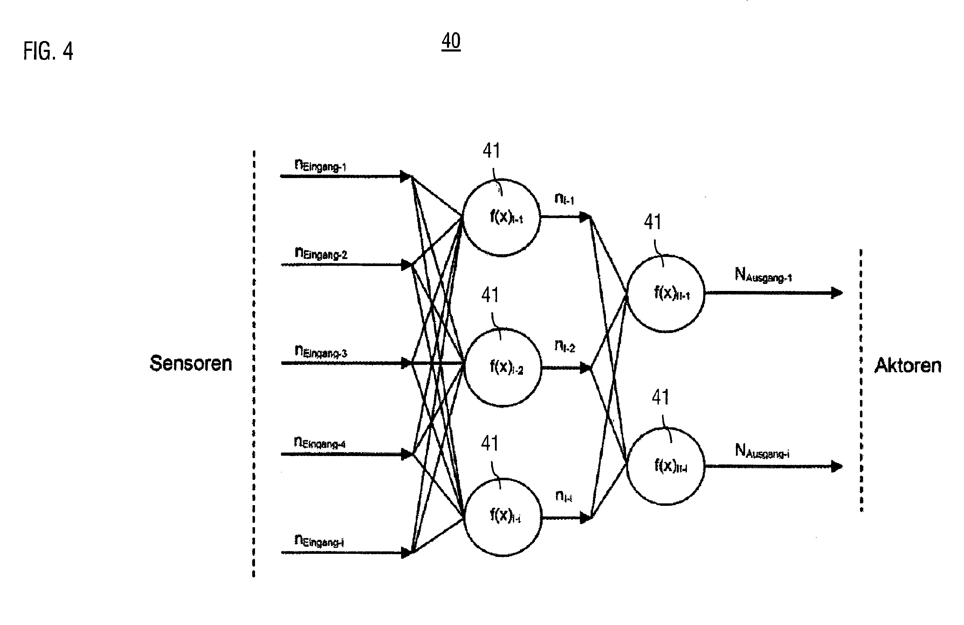

Figur 4 zeigt wiederum lediglich beispielhaft ein künstliches neuronales Netz 40, bei dem die relevanten Sensorsignale der Eingangswerte, in Figur 4 mit n_{Eingang-1} bis n_{Eingang-i} bezeichnet, dargestellt sind. Das künstliche neuronale Netz weist eine Anzahl von neuronalen Knoten 41 auf, die untereinander in einer einfachen Topologie vernetzt sind. Den einzelnen Knoten sind sogenannte Aktivierungsfunktionen F(x) zugeordnet, die die physikalischen Abhängigkeiten zwischen den Werten der Eingangsgrößen und den Ausgangswerten beschreiben. Diese können auch in Form der zuvor beschriebenen Korrelationsmatrix hinterlegt sein.

Die relevanten n_{Eingang-i} - Sensorsignale werden mit bestimmter Frequenz als Eingangsimpuls der ersten Schicht des neuronalen Netzes (NN) übertragen, wo die Aktivierungsfunktion stattfindet. Die Struktur des Algorithmus kann aus beliebig vielen Schichten bestehen. Darüber hinaus beweist solche Struktur im Rahmen der Inter- oder Extrapolation von physikalischen Abhängigkeiten in Aktivierungsfunktion eine Fähigkeit zur Selbstmodifikation bzw. dem damit verbundenen Lernen.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, um eine bestimmte Situation oder ein bestimmtes Material an die Lehre der Erfindung anzupassen, ohne den zugehörigen Bereich zu verlassen. Folglich soll die Erfindung nicht auf das offenbarte bestimmte Ausführungsbeispiel begrenzt sein, sondern die Erfindung soll alle Ausführungsbeispiele umfassen, die in den Bereich der beigefügten Patentansprüche fallen.

### Bezugszeichenliste

- 1: Kühlerjalousie
- 1a: Neuronale Steuerung der Kühlerjalousie
- 1b: Signalleitung für Eingangsgrößen
- 1c: Signalleitung für Ausgangsgröße
- 2: Lüfter
- 2a: Neuronaler Regler des Lüfters
- 3: Kühlmittelpumpe
- 3a: Neuronaler Regler der Kühlmittelpumpe
- 4: Kühlmittelventil des Hauptwasserthermostats
- 4a: Neuronaler Regler des Hauptwasserthermostats
- 5-8: Temperaturmessstelle
- 9: Motorsteuereinheit
- 9a: Eingangssignale der Motorsteuereinheit
- 9b: Ausgangssignale der Motorsteuereinheit
- 10: Antriebsstrangsteuereinheit
- 10a: Eingangssignale der Antriebsstrangsteuereinheit
- 10b: Ausgangssignale der Antriebsstrangsteuereinheit
- 11: Niedertemperaturkühler (NTK)
- 12: Hochtemperaturkühler (HTK)
- 14: Mischkammer (Abgas und Verbrennungsluft)
- 15: Klappe der Abgasrückführung (KL)
- 16: Wärmeübertrager der Abgasrückführung (AGR)
- 17, 18: Abgasturbolader (ATL 1, ATL2)
- 19: Hochdruck-Wärmeübertrager (HD-WÜ)
- 20: Niederdruck-Wärmeübertrager (ND-WÜ)
- 21: Navigationseinrichtung
- 22: Topografie der Fahrtourte
- 23: Topografiedaten
- 24: Betrieb in Motorteillast
- 25: Betrieb in Motorvolllast
- 26: Maximale Kühlmitteltemperatur
- 27: Lüfter-Zuschalt-Temperatur
- 28: Kühlmitteltemperaturverlauf mit herkömmlich gesteuerter Kühlerjalousie
- 29: Kühlmitteltemperaturverlauf mit erfindungsgemäß gesteuerter Kühlerjalousie
- 30: Kühlmitteltemperaturverlauf für Fahrzeug ohne Kühlerjalousie
- 31: Fahrtroutenabschnitt in der Ebene
- 32: Fahrtroutenabschnitt mit Steigung
- 33: Korrelationsmatrix
- 34: Eingangsgröße
- 35: Werte der Eingangsgrößen
- 36: Topografiedaten als Steigung/Gefälle-Information
- 37: Lüfterdrehzahl (Beispiel einer Ausgangsgröße)
- 38: In der Korrelationsmatrix hinterlegte Werte für die Lüfterdrehzahl
- 39: Nutzfahrzeug
- 40: Künstliches neuronales Netz
- 41: Knoten des künstlichen neuronalen Netzes
- 42: Brennkraftmaschine
- 50-55: Ladeluftzuführung
- 60-66: Abgasstrang
- 70-79: Kühlkreislauf

## Patentansprüche

1. Verfahren zur Regelung oder Steuerung wenigstens einer Vorrichtung (1; 2; 3; 4), die Teil eines Kühlsystems eines Fahrzeugs, insbesondere eines Nutzfahrzeugs, ist und/oder die eine Energieeffizienz eines Fahrzeugbetriebs beeinflusst, umfassend:
Bereitstellen einer neuronalen Operationseinheit (1 a; 2a; 3a; 4a) zur Regelung oder Steuerung der Vorrichtung (1; 2; 3; 4), wobei die neuronale Operationseinheit (1a; 2a; 3a; 4a) mittels eines künstlichen neuronalen Netzes (40) eingerichtet ist, einen Stellwert der Vorrichtung (1; 2; 3; 4) als Ausgangswert in Abhängigkeit von übermittelten Werten (35) mehrerer Eingangsgrößen (34) zu bestimmen;
wobei die Eingangsgrößen (34) wenigstens eine Fluidtemperatur des Kühlsystems und eine Topographie eines vorausliegenden Fahrtroutenabschnitts des Fahrzeugs umfassen; und
wobei die Knoten (41) des künstlichen neuronalen Netzes basierend auf einer Korrelation zwischen den Werten der Eingangsgrößen (34) und den Ausgangswerten vorgegeben werden und die Korrelation durch Optimierung eines summarischen Energieverbrauchs des Fahrzeugs im vorausliegenden Fahrtroutenabschnitt und/oder einer Fahrfähigkeit des Fahrzeugs ohne erwärmungsbedingte Leistungsdrosselung im vorausliegenden Fahrtroutenabschnitt bestimmt wird.

2. Verfahren nach Anspruch 1, **dadurch gekennzeichnet, dass** die Vorrichtung eine Kühlerjalousie (1), mit der während der Fahrt ein auf einen Kühler auftreffender Kühlluftstrom einstellbar ist, ein Lüfter (2), eine Kühlmittelpumpe (3), eine Ölpumpe, ein Kühlmittelventil (4) oder ein Klimakompressor ist.

3. Verfahren nach einem der Ansprüche 1 oder 2, **dadurch gekennzeichnet, dass** die Korrelation aus einer Simulation basierend auf einem Fahrzeugmodell als Ergebnis einer Parameterstudie über mögliche Eingangswerte und Ausgangswerte und/oder aus experimentellen Daten, die mit einem Fahrzeug für verschiedene Eingangswerte und Ausgangswerte gemessen werden, ermittelt wird.

4. Verfahren nach Anspruch 3, **dadurch gekennzeichnet, dass** die neuronale Operationseinheit als selbstlernende neuronale Operationseinheit ausgebildet ist, die die ursprünglich vorgegebenen Knotenwerte anpassen kann.

5. Verfahren nach einem der vorhergehenden Ansprüche, **dadurch gekennzeichnet, dass** die Eingangsgrößen eine Fahrzeugposition und eine Fahrzeuggeschwindigkeit umfasst.

6. Verfahren nach einem der vorhergehenden Ansprüche, **dadurch gekennzeichnet, dass** die Eingangsgrößen eine übermittelte Ausgangsgröße mindestens einer weiteren neuronalen Operationseinheit umfasst.

7. Verfahren nach einem der vorhergehenden Ansprüche, **dadurch gekennzeichnet, dass** die Eingangsgrößen eine Umgebungstemperatur, einen Umgebungsdruck und/oder eine Zeitangabe umfassen.

8. Verfahren nach einem der vorhergehenden Ansprüche, **dadurch gekennzeichnet, dass** die bestimmte Korrelation zwischen den Werten der Eingangsgrößen und den Ausgangswerten als Korrelationsmatrix (33) in der neuronalen Operationseinheit hinterlegt ist, wobei die neuronale Operationseinheit eingerichtet ist, die Zwischenwerte der Korrelationsmatrix (33) zu interpolieren.

9. Verfahren nach einem der vorhergehenden Ansprüche, **dadurch gekennzeichnet,**
(a) **dass** die Eingangsgrößen eine Motorlast, eine Getriebelast und/oder ein Fahrzeuggewicht umfassen; und/oder
(b) **dass** die Eingangsgrößen eine Temperatur der Ladeluft, des Motoröls, des Getriebeöls und/ oder einer Kühlluft im Fahrgastraum umfassen.

10. Verfahren nach einem der vorhergehenden Ansprüche, **dadurch gekennzeichnet, dass** die Topographie eines vorausliegenden Fahrtroutenabschnitts als Steigung/Gefälle-Information und Länge (36) des vorausliegenden Streckenabschnitts oder als relative Höheninformation bereitgestellt wird.

11. Fahrzeug, insbesondere Nutzfahrzeug (39), mit mindestens einer neuronalen Operationseinheit nach einem der vorhergehenden Ansprüche.
